# EUROPÄISCHE PATENTSCHRIFT

(11) **EP 3 444 064 B1**
(45) Veröffentlichungstag und Bekanntmachung des Hinweises auf die Patenterteilung: **25.12.2019**
(21) Anmeldenummer: 18183841.8
(22) Anmeldetag: 17.07.2018
(51) Int. Cl.: B23P 11/02, H05B 6/10, H05B 6/14, H05B 6/38, H05B 6/40, H05B 6/42

(54) **VORRICHTUNG ZUR KÜHLUNG EINES SCHRUMPFFUTTERS**
DEVICE FOR COOLING A SHRINK-FIT CHUCK
DISPOSITIF DE REFROIDISSEMENT D'UN MANDRIN À RETRAIT

(30) Priorität: 16.08.2017 DE 102017118643
(43) Veröffentlichungstag der Anmeldung: 20.02.2019
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Schwarz, Wolfgang

(56) Entgegenhaltungen:
- DE-A1-102009 017 461
- DE-A1-102012 002 596

## Beschreibung

Die Erfindung betrifft eine Vorrichtung zur Kühlung eines Schrumpffutters nach dem Oberbegriff des Anspruchs 1.

Eine derartige Vorrichtung ist aus der DE 10 2012 002 596 A1 bekannt. Die dort offenbarte Kühlvorrichtung enthält einen Kühlkopf mit einem auf ein Schrumpffutter aufsetzbaren Kühlaufsatz und einem mit dem Kühlaufsatz verbundenen Ansaugrohr, über das Luft an einem Eingang einer im Kühlkopf angeordneten Durchgangsöffnung angesaugt werden kann. Bei dieser Vorrichtung wird der Kühlkopf zur Kühlung nicht vollständig auf das Schrumpffutter aufgesetzt und die zur Kühlung verwendete Luft wird über einen Spalt zwischen einer unteren Stirnfläche des Kühlkopfes und dem Schrumpffutter eingesaugt. Die angesaugte Luft streicht auf ihrem Weg nach oben über den Spannbereich des Schrumpffutters und kühlt diesen ab. Der Kühleffekt wird dadurch verstärkt, dass dem Luftstrom ein flüssiges Kühlmittel zugeführt wird. Die Menge des zusätzlich zugeführten flüssigen Kühlmittels wird derart festgelegt, dass das flüssige Kühlmittel von dem Luftstrom vollständig mitgerissen wird und keine Flüssigkeit zu der Unterseite des Kühlkopfes gelangt. Dadurch kann eine besonders effektive Kühlung auch ohne aufwändige Auffangeinrichtungen erreicht werden. Allerdings kann sich durch die hier gewählte Luftzuführung je nach Schrumpffutter ein unterschiedlicher Spalt zwischen dem Kühlaufsatz und dem Schrumpffutter ergeben, was bei ungünstigen Verhältnissen zu unerwünschten Strömungsgeräuschen und hoher Geräuschentwicklung führen kann.

Aufgabe der Erfindung ist es, eine Vorrichtung der eingangs genannten Art zu schaffen, die eine effektive Kühlung auch mit verringerter Geräuschemission ermöglicht.

Diese Aufgabe wird durch eine Vorrichtung mit den Merkmalen des Anspruchs 1 gelöst. Zweckmäßige Weiterbildungen und vorteilhafte Ausführungsformen der Erfindung sind in den Unteransprüchen angegeben.

Bei der erfindungsgemäßen Vorrichtung weist der Kühlkopf eine durch eine Schalldämmeinrichtung zumindest teilweise gedämmte Kühlluftzuführung für die Zufuhr der Luft zum Eingang der Durchgangsöffnung am Kühlaufsatz auf. Dadurch entstehen dem Anwender Vorteile, da keine zusätzlichen Lärmschutzmaßnahmen getroffen werden müssen. Dies erleichtert die Verwendung des Geräts im beruflichen Alltag. Die zur Kühlung verwendete Luft kann über einen definierten und von der Art des Schrumpffutters unabhängigen Einlass eingesaugt und über eine Art "Schalldämpfer" zum Eingang des auf das Schrumpffutter aufsetzbaren Kühlaufsatzes geleitet werden. Die Luft wird nicht mehr am Schrumpffutter angesaugt, sondern an einem mit einer definierten Öffnung versehenen Ansaugteil. Dadurch hat die Ansaugöffnung unabhängig von der Geometrie des Schrumpffutters immer die gleiche Form.

Der Kühlaufsatz und das Ansaugrohr sind zweckmäßigerweise von einem Gehäuse umgeben und die Kühlluftzuführung weist einen zwischen dem Gehäuse und dem Ansaugrohr angeordneten Zufuhrkanal sowie einen zwischen dem Gehäuse und dem Kühlaufsatz angeordneten, mit dem ersten Zufuhrkanal verbundenen weiteren Zufuhrkanal auf.

In einer bevorzugten Ausführung enthält die Schalldämmeinrichtung ein innerhalb des Gehäuses um das Ansaugrohr konzentrisch angeordnetes Gitterrohr, in dem der zwischen dem Gehäuse und dem Ansaugrohr angeordnete Zufuhrkanal verläuft. Das Gitterrohr bildet eine Art Schalldämpfer, durch den das Geräusch der durch diesen Zufuhrkanal strömenden Luft nach Außen gedämmt werden kann. Das Gitterrohr kann durch einen oberen und unteren Abstandhalter von dem Ansaugrohr beabstandet in dem Gehäuse gehalten sein und wird vorzugsweise von einem zwischen dem Gitterrohr und dem Gehäuse angeordneten Dämmelement aus Glaswolle oder einem anderen Dämmmaterial umgeben.

In einer weiteren vorteilhaften Ausgestaltung kann an einer Öffnung in einer von der Stirnseite des Kühlaufsatzes beabstandeten Unterseite des Gehäuses eine gegenüber dem runden Eingang der Durchgangsöffnung am Kühlaufsatz nach innen vorstehender Radialbund und/oder ein Dichtelement mit einer nach innen ragenden Dichtlippe vorgesehen sein. Durch den Radialbund kann die durch den weiteren Zufuhrkanal zwischen dem Kühlaufsatz und dem unteren Gehäuseteil strömende Luft nach oben zum Eingang der Durchgangsöffnung am Kühlaufsatz gelenkt werden. Durch das Dichtelement kann ein Spalt zwischen der Öffnung und dem Schrumpffutter abgedichtet und ein unerwünschtes Ansaugen von Luft über diesen Spalt verhindert werden.

Um eine besonders effektive und schnelle Kühlung zu erreichen, kann an dem Kühlaufsatz eine Einrichtung für die Zuführung eines Kühlmittels zu dessen Durchgangsöffnung angeordnet sein. Über diese Einrichtung kann ein Kühlmittel in den Spalt zwischen dem Kühlaufsatz und der Außenseite des zu kühlenden Teils des Schrumpffutters zugeführt werden. Die Menge des zugeführten Kühlmittels wird so dosiert, dass das gesamte Kühlmittel über den Luftstrom mitgerissen wird. Dadurch sind keine aufwändigen Auffangeinrichtungen für das Kühlmittel unterhalb des Schrumpffutters erforderlich.

Die Einrichtung für die Zuführung eines Kühlmittels weist zweckmäßigerweise einen in dem Kühlaufsatz angeordneten Zuführungskanal und von dem Zuführungskanal abzweigende, in die Durchgangsöffnung mündende Zufuhrlöcher auf. Die Zuführlöcher können schräg nach unten in Richtung der Unterseite des Kühlaufsatzes verlaufen, so dass das Kühlmittel schräg von oben auf dem Luftstrom trifft. Das Kühlmittel kann bevorzugt aus Wasser bestehen. Es sind aber auch flüssiges CO₂, flüssiger Stickstoff oder andere flüssige oder gasförmige Kühlmedien möglich.

In dem Kühlaufsatz können außerdem schräg nach oben gerichtete Blasluftöffnungen für die Zuführung von Blasluft vorgesehen sein. Dadurch kann eine eventuell auf dem Schrumpffutter verbleibende Kühlflüssigkeit abgeblasen werden.

In einer weiteren zweckmäßigen Ausführung kann in dem Kühlaufsatz auch eine Induktionseinrichtung integriert sein. Dadurch kann der Kühlaufsatz nicht nur zur Abkühlung, sondern auch zum induktiven Erwärmen des Schrumpffutters und damit zum Ein- oder Ausschrumpfen eines Werkzeuges eingesetzt werden.

Weitere Besonderheiten und Vorzüge der Erfindung ergeben sich aus der folgenden Beschreibung eines bevorzugten Ausführungsbeispiels anhand der Zeichnung. Es zeigen:
- **Fig. 1**: eine schematische Darstellung einer Vorrichtung zur Kühlung eines Schrumpffutters in einer zum Teil geschnittenen Seitenansicht;
- **Fig. 2**: eine Detailansicht der in Figur 1 gezeigten Vorrichtung;
- **Fig. 3**: eine Detailansicht eines Kühlaufsatzes und
- **Fig. 4**: ein Schrumpfgerät in einer Perspektive.

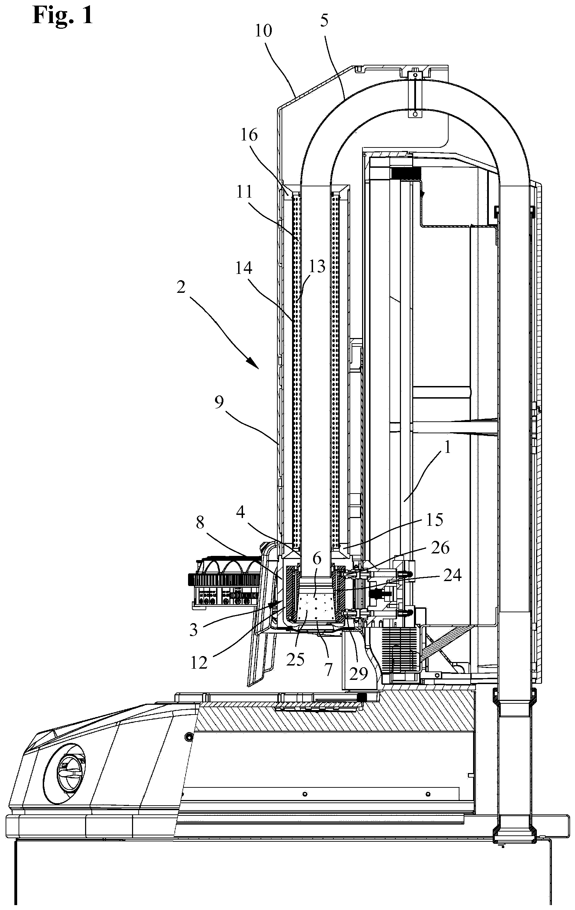

Die in Figur 1 nur zum Teil dargestellte Vorrichtung zur Kühlung eines Schrumpffutters enthält einen an einem Gestell oder Ständer 1 verschiebbar geführten Kühlkopf 2, der einen zumindest auf den zu kühlenden Teil des Schrumpffutters aufsetzbaren Kühlaufsatz 3 und ein mit dem Kühlaufsatz 3 verbundenes Ansaugrohr 4 enthält. Das Ansaugrohr 4 ist über eine als Schlauch oder stabiles Rohr ausgebildete Ansaugleitung 5 mit einem hier nicht dargestellten Saugaggregat verbunden. Der im Folgenden noch näher erläuterte Kühlaufsatz 3 enthält eine Durchgangsöffnung 6, deren Innenkontur so auf die Außenkontur des zu kühlenden Teils des Schrumpffutters abgestimmt ist, dass beim Aufsetzen des Kühlaufsatz 3 auf das Schrumpffutter ein Spalt zwischen der Innenwand des Kühlaufsatzes und der Außenfläche des Schrumpffutters verbleibt. Dabei ist die Innenkontur der Durchgangsöffnung 6 so dimensioniert, dass ein großes Spektrum an Schrumpffuttern gekühlt werden kann, insbesondere was deren Durchmesser und Länge betrifft. Über die an das Saugaggregat angeschlossene Ansaugleitung 5, das Ansaugrohr 4 und den Kühlaufsatz 3 kann so Luft an einem unteren Eingang 7 der Durchgangsöffnung 6 des Kühlaufsatzes 3 angesaugt und über den Spalt an der Außenfläche des Schrumpffutters zu dessen Kühlung entlang geleitet werden. Das Saugaggregat bildet zusammen mit der Ansaugleitung 5 und dem Ansaugrohr 4 eine Ansaugeinrichtung, über die Kühlluft in den Kühlaufsatz 3 eingesaugt und zur Kühlung des Schrumpffutters an diesem entlanggeführt werden kann.

Der Kühlaufsatz 3 und das Ansaugrohr 4 sind innerhalb eines hier aus einem unteren Gehäuseteil 8 und einem oberen Gehäuseteil 9 zusammengesetzten Gehäuses angeordnet. An der Oberseite des oberen Gehäuseteils 9 ist ein nach hinten offenes Ansaugteil 10 angeordnet, durch das die Luft aus der Umgebung eingesaugt und über eine innerhalb des Gehäuses angeordnete Kühlluftzuführung zu dem Eingang 7 der Durchgangsöffnung 6 des Kühlaufsatzes 3 geleitet werden kann.

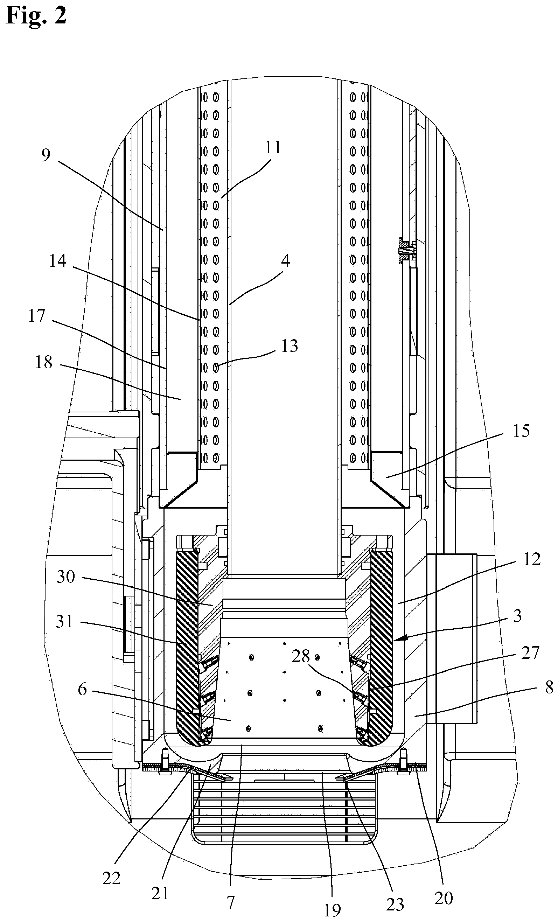

Wie besonders aus Figur 2 hervorgeht, weist die innerhalb des Gehäuses angeordnete Kühlluftzuführung einen zwischen dem Ansaugrohr 4 und dem oberen Gehäuseteil 9 angeordneten, im Querschnitt ringförmigen Zufuhrkanal 11 und einen zwischen dem Kühlaufsatz 3 und dem unteren Gehäuseteil 8 gebildeten, im Querschnitt ringförmigen weiteren Zufuhrkanal 12 auf. Der zwischen dem Ansaugrohr 4 und dem oberen Gehäuseteil 9 angeordnete Zufuhrkanal 11 verläuft in einem mit radialen Durchlässen 13 versehenen Gitterrohr 14, das in dem oberen Gehäuseteil 9 konzentrisch zum Ansaugrohr 4 angeordnet ist. Das Gitterrohr 14 wird durch einen unteren und oberen ringförmigen Abstandshalter 15 bzw. 16 von dem Ansaugrohr 4 beabstandet in dem oberen Gehäuseteil 9 gehalten. In einem zwischen dem Gitterrohr 14 und dem oberen Gehäuseteil 9 vorhandenen Ringraum 17 ist ein Dämmkörper 18 aus Glaswolle oder einem anderen Dämmmaterial angeordnet.

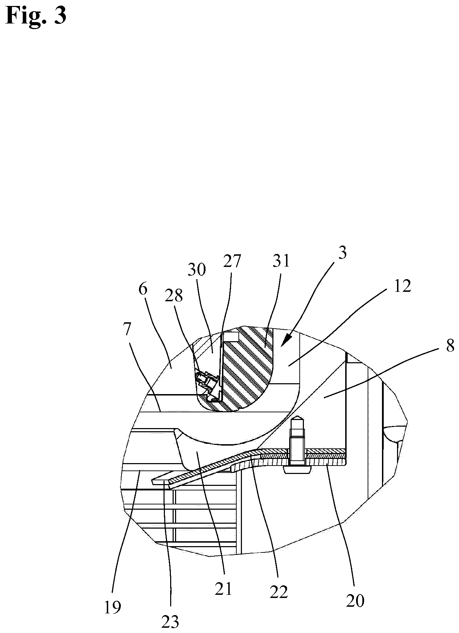

Wie auch aus Figur 3 ersichtlich ist, enthält das untere Gehäuseteil 8 an einer Öffnung 19 in seiner von der Stirnseite des Kühlaufsatzes 3 beabstandeten Unterseite 20 einen gegenüber dem runden Eingang 7 der Durchgangsöffnung 6 am Kühlaufsatz 3 nach innen vorstehenden Radialbund 21, über den die in dem weiteren Zufuhrkanal 12 zwischen dem Kühlaufsatz 3 und dem unteren Gehäuseteil 8 strömende Luft nach oben zum Eingang 7 der Durchgangsöffnung 6 am Kühlaufsatz 3 gelenkt wird. An der Öffnung 19 in der Unterseite 20 des unteren Gehäuseteils 8 ist ein Dichtelement 22 mit einer flexiblen Dichtlippe 23 zur Anlage an dem Schrumpffutter befestigt. Dadurch kann ein Spalt zwischen der Öffnung 19 und dem Schrumpffutter abgedichtet und ein unerwünschtes Ansaugen von Luft über diesen Spalt verhindert werden. Die Dichtlippe 23 besteht aus einem hitzebeständigen Material wie z. B. einem Glasfasergewebe.

Um eine besonders effektive und schnelle Kühlung zu erreichen, kann an dem Kühlaufsatz 3 eine Einrichtung für die Zuführung eines flüssigen oder gasförmigen Kühlmittels zu dessen Durchgangsöffnung 6 angeordnet sein. Über diese Einrichtung kann Wasser oder ein anderes flüssiges oder gasförmiges Kühlmittel in den Spalt zwischen dem Kühlaufsatz 3 und der Außenseite des zu kühlenden Teils des Schrumpffutters eingespritzt werden. Die Menge des eingespritzten Kühlmittels wird so dosiert, dass das gesamte Kühlmittel über den Luftstrom mitgerissen wird. Diesen Punkt kommt eine besondere Bedeutung zu. Die Außenfläche des zu kühlenden Teils des Schrumpffutters soll nicht "begossen" werden, vielmehr soll das im Luftstrom gelöste Kühlmittel über die Oberfläche streichen. Dadurch sind insbesondere bei flüssigen Kühlmitteln keine aufwändigen Auffangeinrichtungen für das Kühlmittel unterhalb des Schrumpffutters erforderlich. In einer besonders bevorzugten Ausführungsform ist eine hier nicht weiter ausgeführte Vorrichtung nachgelagert an das Ansaugrohr angeschlossen, um das verwendete Kühlmittel wieder vom Luftstrom zu trennen und für eine erneute Verwendung bereitzustellen.

Wie aus Figur 1 hervorgeht, weist die Einrichtung für die Zuführung eines Kühlmittels bei dem gezeigten Ausführungsbeispiel einen in dem Kühlaufsatz 3 angeordneten Zuführungskanal 24 und von dem Zuführungskanal 24 abzweigende, in die Durchgangsöffnung 6 mündende Zuführlöcher 25 auf. Die Zuführlöcher 25 sind schräg nach unten in Richtung des Eingangs 7 der Durchgangsöffnung 6 an der Unterseite des Kühlaufsatzes 3 ausgerichtet, so dass das flüssige Kühlmittel schräg von oben auf dem Luftstrom trifft. Über einen Anschluss 26 und eine nicht dargestellte Pumpe kann flüssiges Kühlmittel in den Zuführungskanal 24 und von dort über die Zuführlöcher 25 zu der Durchgangsöffnung 6 des Kühlaufsatzes 3 geleitet werden.

In dem Kühlaufsatz 3 ist außerdem ein in Figur 2 erkennbarer Zufuhrkanal 27 mit bevorzugt schräg nach oben gerichtete Blasluftöffnungen 28 für die Zuführung von Blasluft vorgesehen. Dadurch kann eine eventuell auf dem Schrumpffutter verbleibende Kühlflüssigkeit abgeblasen werden. An dem Kühlaufsatz 3 ist ein in Figur 1 gezeigter Anschluss 29 für die Zuführung von Blasluft angeordnet.

Zur einfacheren Fertigung kann der Kühlaufsatz 3 aus einer aus einer Innenhülse 30 und einer Außenhülse 31 zusammengesetzt sein. Der Kühlaufsatz 3 kann aber auch einteilig ausgeführt sein.

Im Folgenden wird die Funktionsweise der vorstehend beschriebenen Vorrichtung erläutert:
Der Kühlaufsatz 3 wird so auf das zu kühlende Schrumpffutter aufgesetzt, dass der Kühlaufsatz 3 mit seiner Unterseite 20 auf dem Schrumpffutter oder auf einer Haltevorrichtung für das Schrumpffutter aufsitzt. Dadurch kann das unkontrollierte Ansaugen von Außenluft und die damit verbundene Geräuschentwicklung vermieden werden. Diese abgedichtete Anordnung wird durch das zusätzliche Dichtelement 22 unterstützt. Über das Ansaugaggregat wird dann Luft an dem Ansaugteil 10 eingesaugt und über den Zufuhrkanal 11 zwischen dem Ansaugrohr 4 und dem oberen Gehäuseteil 8 sowie den weiteren Zufuhrkanal 12 zwischen dem Kühlaufsatz 3 und dem unteren Gehäuseteil 9 nach unten zum Eingang 7 an der Durchgangsöffnung 6 des Kühlaufsatzes 3 geführt. Von dort wird dann die Kühlluft durch den Spalt zwischen der Durchgangsöffnung 6 des Kühlaufsatzes 3 und der Außenseite des Schrumpffutters sowie das Ansaugrohr 4 nach oben geführt. Das über die Zufuhrlöcher 25 zusätzlich zugeführte Kühlmittel wird durch den nach oben geführten Luftstrom mitgerissen.

Nach dem Abschluss des Kühlvorgangs wird die Zuführung des Kühlmittels abgeschaltet, um das Schrumpffutter insbesondere bei Verwendung eines flüssigen Kühlmittels mit dem verbleibenden Luftstrom zu trocknen. Über die Blasluftöffnungen 28 kann zusätzliche Blasluft eingeleitet werden, um das eventuell noch vorhandene flüssige Kühlmittel abzublasen.

An dem Kühlaufsatz 3 kann ein Temperatursensor zur Ermittlung der Temperatur des Schrumpffutters vorgesehen sein. Dadurch kann ermittelt werden, ob das Schrumpffutter noch zu heiß ist. Der ermittelte Wert kann über ein Ampelsystem an dem Kühlaufsatz 3 angezeigt werden (rot = zu heiß um angefasst zu werden; grün = ausreichend gekühlt). Alternativ oder zusätzlich zur optischen Anzeige kann die Kühlaufsatz 3 bei hoher Temperatur auch verriegelt werden, so dass ein verfrühtes Anheben des Kühlaufsatz 3 unmöglich ist. Bevorzugt misst der Temperatursensor die Temperatur des abströmenden Luftstroms nach dem Kühlbereich. Alternativ ist es aber auch möglich, die Temperatur des Schrumpffutters direkt zu messen, beispielsweise berührungslos über Infrarotmessung der Wärmestrahlung oder durch einen berührenden Sensor.

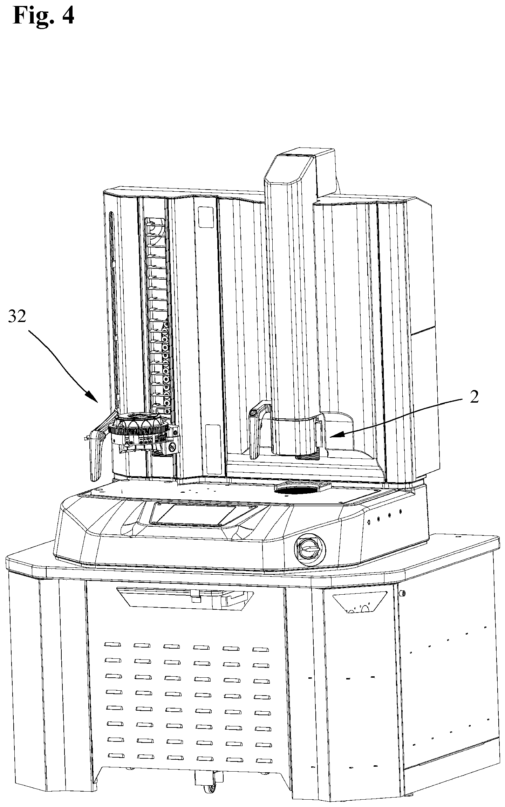

Die Kühlvorrichtung kann theoretisch als separates Element vertrieben werden, vorzugsweise ist sie jedoch Teil eines in Figur 4 schematisch dargestellten vollständigen Schrumpfgerätes. Bei diesem Schrumpfgerät kann neben dem Kühlkopf 2 eine Schrumpfeinrichtung 32 zum Ein- oder Ausschrumpfen des Werkzeuges angeordnet sein. In dem Kühlaufsatz kann z.B. aber auch eine Induktionseinrichtung integriert sein. Dadurch kann der Kühlaufsatz nicht nur zur Abkühlung, sondern auch zum Ein- oder Ausschrumpfen des Werkzeuges eingesetzt werden.

### Bezugszeichenliste

- 1: Ständer
- 2: Kühlkopf
- 3: Kühlaufsatz
- 4: Ansaugrohr
- 5: Ansaugleitung
- 6: Durchgangsöffnung
- 7: Eingang
- 8: Unteres Gehäuseteil
- 9: Oberes Gehäuseteil
- 10: Ansaugteil
- 11: Zufuhrkanal
- 12: Weiterer Zufuhrkanal
- 13: Durchlass
- 14: Gitterrohr
- 15: Unterer Abstandshalter
- 16: Oberer Abstandshalter
- 17: Ringraum
- 18: Dämmkörper
- 19: Öffnung
- 20: Unterseite
- 21: Radialbund
- 22: Dichtelement
- 23: Dichtlippe
- 24: Zuführungskanal
- 25: Zufuhrloch
- 26: Anschluss
- 27: Zuführkanal
- 28: Blasluftöffnung
- 29: Anschluss
- 30: Innenhülse
- 31: Außenhülse
- 32: Schrumpfeinrichtung

## Patentansprüche

1. Vorrichtung zur Kühlung eines Schrumpffutters mit einem Kühlkopf (2), der einen auf das Schrumpffutter aufsetzbaren Kühlaufsatz (3) und ein mit dem Kühlaufsatz (3) verbundenes Ansaugrohr (4) zum Ansaugen von Luft an einem Eingang (7) einer Durchgangsöffnung (6) im Kühlaufsatz (3) enthält, **dadurch gekennzeichnet, dass** der Kühlkopf (2) eine durch eine Schalldämmeinrichtung (14, 18) zumindest teilweise gedämmte Kühlluftzuführung (11, 12) für die Zufuhr der Luft zum Eingang (7) der Durchgangsöffnung (6) am Kühlaufsatz (3) enthält.

2. Vorrichtung nach Anspruch 1, **dadurch gekennzeichnet, dass** der Kühlaufsatz (3) und das Ansaugrohr (4) von einem Gehäuse (8, 9) umgeben sind und die Kühlluftzuführung (11, 12) einen zwischen dem Gehäuse (8, 9) und dem Ansaugrohr (4) angeordneten Zufuhrkanal (11) sowie einen zwischen dem Gehäuse (8, 9) und dem Kühlaufsatz (3) angeordneten, mit dem ersten Zufuhrkanal (11) verbundenen, weiteren Zufuhrkanal (12) umfasst.

3. Vorrichtung nach Anspruch 2, **dadurch gekennzeichnet, dass** die Schalldämmeinrichtung (14, 18) ein innerhalb des Gehäuses (8, 9) um das Ansaugrohr (4) konzentrisch angeordnetes Gitterrohr (14) enthält, in dem der zwischen dem Ansaugrohr (4) und dem Gehäuse (8, 9) angeordnete Zufuhrkanal (11) verläuft.

4. Vorrichtung nach Anspruch 3, **dadurch gekennzeichnet, dass** das Gitterrohr (14) durch einen oberen und unteren Abstandhalter (15, 16) von dem Ansaugrohr (4) beabstandet in dem Gehäuse (8, 9) gehalten ist.

5. Vorrichtung nach Anspruch 3 oder 4, **dadurch gekennzeichnet, dass** die Schalldämmeinrichtung (14, 18) ein zwischen dem Gitterrohr (14) und dem Gehäuse (8, 9) angeordnetes Dämmelement (18) enthält.

6. Vorrichtung nach einem der Ansprüche 2 bis 5, **dadurch gekennzeichnet, dass** an einer Öffnung (19) in einer von der Stirnseite des Kühlaufsatzes (3) beabstandeten Unterseite (20) des Gehäuses (8, 9) eine gegenüber dem runden Eingang (7) der Durchgangsöffnung (6) am Kühlaufsatz (3) nach innen vorstehenden Radialbund (21) und/oder ein Dichtelement (22) mit einer nach innen ragenden Dichtlippe (23) vorgesehen ist.

7. Vorrichtung nach einem der Ansprüche 1 bis 6, **dadurch gekennzeichnet, dass** an dem Kühlaufsatz (3) eine Einrichtung (24, 25) für die Zuführung eines flüssigen oder gasförmigen Kühlmittels zu der Durchgangsöffnung (6) des Kühlaufsatzes (3) angeordnet ist.

8. Vorrichtung nach Anspruch 7, **dadurch gekennzeichnet, dass** die Einrichtung (24, 25) für die Zuführung eines flüssigen oder gasförmigen Kühlmittels einen in dem Kühlaufsatz (3) angeordneten Zuführungskanal (24) und von dem Zuführungskanal (24) abzweigende, in die Durchgangsöffnung (6) mündende Zufuhrlöcher (25) enthält.

9. Vorrichtung nach Anspruch 8, **dadurch gekennzeichnet, dass** die Zufuhrlöcher (25) schräg nach unten in Richtung des Eingangs (7) der Durchgangsöffnung (6) an der Unterseite des Kühlaufsatzes (3) verlaufen.

10. Vorrichtung nach einem der Ansprüche 1 bis 9, **dadurch gekennzeichnet, dass** in dem Kühlaufsatz (3) mehrere Blasluftöffnungen (28) für die Zuführung von Blasluft angeordnet sind.

11. Vorrichtung nach Anspruch 10, **dadurch gekennzeichnet, dass** die Blasluftöffnungen (28) schräg nach oben gerichtet sind.

12. Vorrichtung nach einem der Ansprüche 1 bis 11, **dadurch gekennzeichnet, dass** der Kühlaufsatz (3) aus einer Innenhülse (30) und einer Außenhülse (31) besteht.

## Claims

1. Apparatus for cooling a shrink-fit chuck, having a cooling head (2), which contains a cooling attachment (3) mountable on the shrink-fit chuck and contains a suction tube (4) connected to the cooling attachment (3) and serving for sucking in air at an inlet (7) of a passage opening (6) in the cooling attachment (3), **characterized in that** the cooling head (2) contains a cooling-air feed (11, 12), at least partially damped by a sound-damping device (14, 18), for the feeding of the air to the inlet (7) of the passage opening (6) at the cooling attachment (3).

2. Apparatus according to Claim 1, **characterized in that** the cooling attachment (3) and the suction tube (4) are surrounded by a housing (8, 9), and the cooling-air feed (11, 12) comprises a feed channel (11), which is arranged between the housing (8, 9) and the suction tube (4), and a further feed channel (12), which is arranged between the housing (8, 9) and the cooling attachment (3) and is connected to the first feed channel (11).

3. Apparatus according to Claim 2, **characterized in that** the sound-damping device (14, 18) contains a grid tube (14) which is arranged within the housing (8, 9) concentrically around the suction tube (4) and in which the feed channel (11) arranged between the suction tube (4) and the housing (8, 9) extends.

4. Apparatus according to Claim 3, **characterized in that** the grid tube (14) is held in the housing (8, 9) spaced apart from the suction tube (4) by an upper and lower spacer (15, 16).

5. Apparatus according to Claim 3 or 4, **characterized in that** the sound-damping device (14, 18) contains a damping element (18) which is arranged between the grid tube (14) and the housing (8, 9).

6. Apparatus according to one of Claims 2 to 5, **characterized in that**, at an opening (19) in a bottom side (20), spaced apart from the end side of the cooling attachment (3), of the housing (8, 9), provision is made of a radial collar (21), which projects inwardly with respect to the round inlet (7) of the passage opening (6) at the cooling attachment (3), and/or a sealing element (22), which has an inwardly projecting sealing lip (23).

7. Apparatus according to one of Claims 1 to 6, **characterized in that**, at the cooling attachment (3), there is arranged a device (24, 25) for the feeding of a liquid or gaseous cooling medium to the passage opening (6) of the cooling attachment (3).

8. Apparatus according to Claim 7, **characterized in that** the device (24, 25) for the feeding of a liquid or gaseous cooling medium contains a feed channel (24), which is arranged in the cooling attachment (3), and feed holes (25), which branch off from the feed channel (24) and open into the passage opening (6).

9. Apparatus according to Claim 8, **characterized in that** the feed holes (25) extend obliquely downwardly in the direction of the inlet (7) of the passage opening (6) on the bottom side of the cooling attachment (3).

10. Apparatus according to one of Claims 1 to 9, **characterized in that** multiple blowing-air openings (28) for the feeding of blowing air are arranged in the cooling attachment (3).

11. Apparatus according to Claim 10, **characterized in that** the blowing-air openings (28) are directed obliquely upwardly.

12. Apparatus according to one of Claims 1 to 11, **characterized in that** the cooling attachment (3) consists of an inner sleeve (30) and an outer sleeve (31).

## Revendications

1. Dispositif de refroidissement d'un mandrin à retrait, doté d'une tête de refroidissement (2) contenant une calotte de refroidissement (3) pouvant être posée sur le mandrin à retrait et un tube d'aspiration (4) solidaire de la calotte de refroidissement (3) et destiné à aspirer de l'air à une entrée (7) d'une ouverture de passage (6) ménagée dans la calotte de refroidissement (3), **caractérisé en ce que** la tête de refroidissement (2) contient une conduite d'alimentation en air de refroidissement (11, 12) au moins en partie isolée par un dispositif d'amortissement phonique (14, 18) et destinée à amener l'air à l'entrée (7) de l'ouverture de passage (6) ménagée dans la calotte de refroidissement (3).

2. Dispositif selon la revendication 1, **caractérisé en ce que** la calotte de refroidissement (3) et le tube d'aspiration (4) sont entourés d'un carter (8, 9) et la conduite d'alimentation en air de refroidissement (11, 12) comprend un canal d'alimentation (11) disposé entre le carter (8, 9) et le tube d'aspiration (4), ainsi qu'un autre canal d'alimentation (12) disposé entre le carter (8, 9) et la calotte de refroidissement (4) et relié au premier canal d'alimentation (11).

3. Dispositif selon la revendication 2, **caractérisé en ce que** le dispositif d'amortissement phonique (14, 18) contient un tube percé de trous (14) situé à l'intérieur du carter (8, 9), disposé concentriquement autour du tube d'aspiration (4), dans lequel s'étend le canal d'alimentation (11) disposé entre le tube d'aspiration (4) et le carter (8, 9).

4. Dispositif selon la revendication 3, **caractérisé en ce que** le tube percé de trous (14) est maintenu à distance du tube d'aspiration (4) dans le carter (8,9) par une entretoise supérieure et une entretoise inférieure (15, 16).

5. Dispositif selon la revendication 3 ou 4, **caractérisé en ce que** le dispositif d'amortissement phonique (14, 18) contient un élément d'amortissement phonique (18) disposé entre le tube percé de trous (14) et le carter (8, 9).

6. Dispositif selon l'une quelconque des revendications 2 à 5, **caractérisé en ce qu'**à une ouverture (19) ménagée dans une face inférieure (20) du carter (8, 9) espacée de la face frontale de la calotte de refroidissement (3), il est prévu une bride radiale (21) en saillie vers l'intérieur et faisant face à l'entrée (7) de forme ronde de l'ouverture de passage (6) ménagée dans la calotte de refroidissement (3) et/ou un élément d'étanchéité (22) avec une lèvre d'étanchéité (23) en saillie vers l'intérieur.

7. Dispositif selon l'une quelconque des revendications 1 à 6, **caractérisé en ce qu'**un dispositif (24, 25) destiné à amener un réfrigérant fluide ou gazeux à l'ouverture de passage (6) de la calotte de refroidissement (3) est disposé sur la calotte de refroidissement (3).

8. Dispositif selon la revendication 7, **caractérisé en ce que** le dispositif (24, 25) destiné à amener un réfrigérant fluide ou gazeux contient un canal d'alimentation (24), disposé dans la calotte de refroidissement (3), et des trous d'alimentation (25) qui partent du canal d'alimentation (24) et débouchent dans l'ouverture de passage (6).

9. Dispositif selon la revendication 8, **caractérisé en ce que** les trous d'alimentation (25) s'étendent en biais et vers le bas, en direction de l'entrée (7) de l'ouverture de passage (6) ménagée dans la face inférieure de la calotte de refroidissement (3).

10. Dispositif selon l'une quelconque des revendications 1 à 9, **caractérisé en ce que** la calotte de refroidissement (3) comporte plusieurs orifices de soufflage d'air (28), destinés à amener de l'air soufflé.

11. Dispositif selon la revendication 10, **caractérisé en ce que** les orifices de soufflage d'air (28) sont orientés en biais vers le haut.

12. Dispositif selon l'une quelconque des revendications 1 à 11, **caractérisé en ce que** la calotte de refroidissement (3) est constituée d'un manchon intérieur (30) et d'un manchon extérieur (31).
